# EUROPEAN PATENT APPLICATION

(11) **EP 0 539 113 A1**
(43) Date of publication of application: **28.04.1993**
(21) Application number: 92309454.4
(22) Date of filing: 16.10.1992
(51) Int. Cl.: F16B 37/12

(54) **Improvements relating to screw threaded fasteners**

(30) Priority: 22.10.1991 GB 9122619
(71) Applicant: P.S.M. INTERNATIONAL PLC, West Midlands WV13 2JS (GB)
(72) Inventor: Highfield, Anthony Michael, Fairway, Ironbridge, Shropshire (GB)
(74) Representative: Hands, Horace Geoffrey

(57) **Abstract**

A screw threaded fastener, Figure 4 is of the kind having an external screw thread (10) which is particularly coarse for engagement in soft material, and is provided with a standard conventional screw thread (24) in its bore to receive a screw intended to anchor a component in position. One end of the fastener is provided with a one way drive connection by having diametrically located faces (18) to engage a screwdriver like blade and associated with cam faces (20) in the trailing direction when the fastener is screwed into a component, so that when drive is reversed the screwdriver is cammed out of the fastener and the risk of the fastener being stripped out of the soft material is reduced.

## Description

One well known kind of industrial screw fastener comprises a tubular sleeve of metal having both internal and external, that is female and male screw threads. Such as fastener, sometimes called a threaded bushing is intended for use in a relatively soft material which needs a screw thread for example for a replaceable part. The soft material may be capable of carrying a screw thread once, or a few times, but if a bolt is repeatedly screwed in and out of it, the thread in the soft material may strip. So the sleeve or threaded bushing is installed in the hole, either by screwing into a preformed threaded bore in the soft material, or more usually by cutting or rolling its own thread form in a plain bore in the soft material. The replaceable bolt then screws into the bushing. The bushing map be made of steel or other hard materials so that it does not wear and so that the thread does not easily strip. The internal thread in the bushing is usually a standardised one in terms of diameter, pitch and thread profile, but the external one may be non-standard for example particularly coarse and where appropriate shaped for self-cutting of the complementary threads. Such a screw fastener is well known and has been mass produced in many versions for many years: in this specification it is called "a fastener of the kind referred to".

Prior patent GB 2199106A shows a proposed modification of the fastener of the kind referred to in which the bore is formed of hexagonal shape at one end to allow installation by a key or like. In practice it is found that if the key is an easy fit in the bore it could turn and jam in the bore, so that when the key is to be removed it pulls the bushing out of the soft material. Of course, a tight fit of key and bush prevents such rotation but equally runs the same risk particularly in soft material which does not form threads well. Moreover, the length needed for the hexagonal socket shortens the available length to carry the internal screw thread which is a disadvantage.

The much older prior patent GB 850396A shows an arrangement with a diametric slot at one end which can be inserted first or last into the hole. It is intended to be inserted first when the material being provided with the fastener is cross grained wood or hard wood for example when the edges of the slot form cutting edges. They sever fibres of the wood or remove swarf if it is inserted in a hole in metal, thus facilitating actual cutting of the complementary screw thread. When inserted last, the plain end of the bushing rolls a thread for example in softer metal or in lengthwise grained wood, without swarf or fibre removal. The plain end is tapered to facilitate entry, but the slotted end is not, or less so. When inserted slotted end last, the slots may be used to accept a screwdriver blade to turn the bushing to form the thread.

In practice these bushings are used industrially in large numbers on production lines and any one user is unlikely to require dual purpose bushings, so the versatility of the arrangements in 850396 is unimportant. The manufacturer of the bushings has long production runs of single size, dedicated purpose fasteners, and the possibility of making one fastener for two purposes is hardly advantageous, and is more of a disadvantage by the user since it offers the possibility of mis-use by inserting the wrong end first.

The usual installation method is to use a screwdriver blade extending diametrically of a peg which is received in the screw threaded bore of the bushing. The same point arises with the slots of 850396 as with the hexagon bore of the other mentioned disclosure in that jamming and inadvertent extraction of newly installed bushings is a possibility. In fact fast and simple installation is the principle problem facing the designer or user of these fastenings of the kind referred to.

The object of the invention is to solve this problem.

According to the invention, a fastener of the kind referred to is characterised by the provision of a one-way drive connecting slot at one end for cooperation with a screwdriver-like tool. By these means, installation is accomplished in the conventional way by screwing the bush into the material, but separation and removal of the installation tool is effected by a simple reversal of the direction of rotation thereof, without any risk of the bush being disturbed because of the one-way coupling.

Preferably the coupling is arranged so as to cam the installation tool out of the bushing.

In a preferred embodiment, a slot is provided at two diametric positions in one end of the bushing, the slot comprising a pair of faces (at ends of the diameter) contained in a common plane also containing the axis of the fastener, and each of these faces being associated with a cam face extending anti-clockwise away from said face in a peripheral direction.

The invention is more particularly described with reference to the accompanying drawing in which :-
Figure 1 is a side elevation of a typical bushing according to the invention;
Figure 2 is a plan view thereof;
Figure 3 shows the bushing installed and with a component secured in place, and
Figure 4 shows a variation.

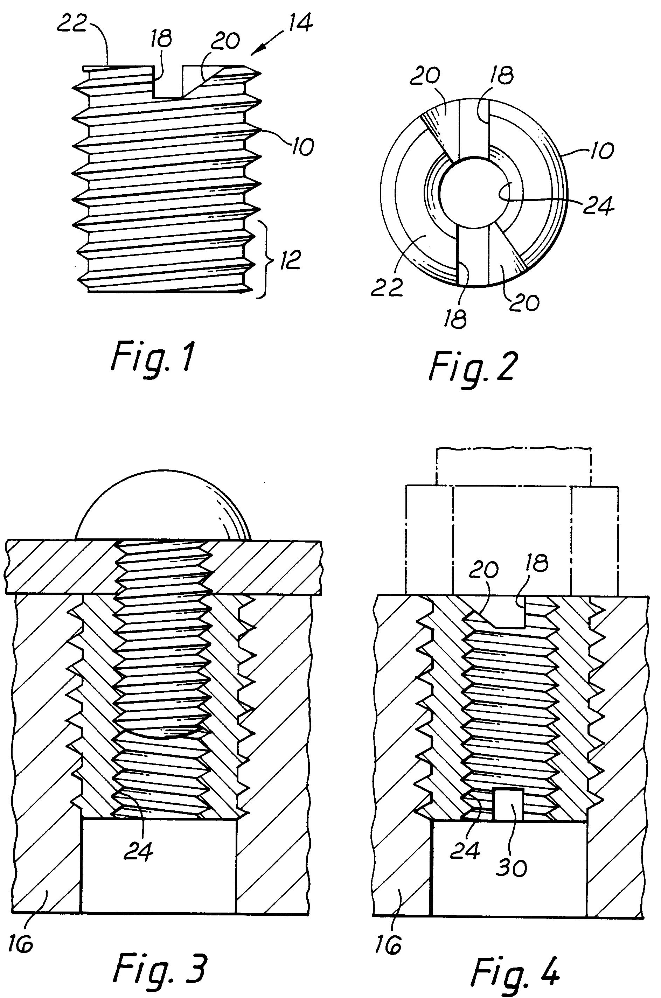

Turning to the drawing and particularly Figure 1, the bushing shown therein has an ordinary righthand thread on the exterior of the bushing at 10, although this direction of thread is not critical, and if required a lefthand thread could be employed. The thread is of reduced height, or in short generally tapered at the lower end 12. A one-way drive connection for a screwdriver-like blade is provided at the top end 14, which is the end inserted last in the component 16 (Figure 3 and 4) during installation.

The one-way coupling comprises a pair of generally diametrically located faces 18 contained in a plane including the axis of the fastener, and of sufficient length to provide drive faces for a screwdriver blade when located thereagainst. These faces 18 extend axially along the fastener for an appropriate distance for the blade engagement and intersect cam faces 20 which extend anti-clockwise (in the righthand thread version) or clockwise (in the lefthand thread version) for part of the periphery of the end edge at the top of the fastener. The cam faces merge into the end edge 22.

The interior of the fastener is provided with an appropriate screw thread 24.

The installation tool comprises a peg which may be of generally similar length to the fastener, provided with diametrically located screwdriver blade portions towards one end. The peg may be inserted into the bore of the fastener so as to align and carry the fastener, without regard to location of the blade portions in the drive coupling. The bush, supported on the tool, is then aligned with a preformed plain (in this particular illustrated embodiment) hole and the tool is then rotated. The tool is also directed towards the workpiece 16 with appropriate pressure, and as the bush enters the hole and drags in the material, the tool will rotate relative to the bush until the blades engage the cam portions 20 when they will run down those faces and bring the blades against the drive faces 18. The bush will then be rotated with the tool, and due to the axial pressure applied, the bush will enter the hole and form the complementary screw thread until the bush is fully installed as shown in Figures 3 and 4. At such time, for example signalled by contact between a sensor probe carried by the rotating tool and the surface of the component adjacent the bushing, the rotation of the tool is reversed. The blades then move away from the drive faces 18 and are displaced by the cam surfaces 20 to begin the separation of the tool from the bush, following which the tool is separated by a simple axial movement. It will be seen that the cam surfaces displace the blades out of the slot because of the rotational reversal, and this eliminates the possibility of the bush being pulled out because of engagement between the blade and the slot.

In the version shown in Figures 1-3 the bottom end of the bushing is plain, but if desired a parallel sided slot 30 may be provided at that end as in Figure 4 for the purpose of thread cutting. In such case the external thread may be of constant cross section without any tapering at the bottom end.

Figure 3 and 4 show in full and chain line components fixed in place using the bushing.

## Claims

1. A fastener of the kind comprising a tubular sleeve of metal having both internal and external screw threads, and characterised by the provision of a one way drive connecting slot at one end for cooperation with a screwdriver-like tool.

2. A fastener as claimed in Claim 1 wherein the one way connection comprises a pair of faces at ends of a diameter of the fastener contained in a common plane also containing the axis of the fastener.

3. A fastener as claimed in Claim 2 wherein each of said pair of faces is associated with a cam face extending anti-clockwise away from the face in a peripheral direction.

4. A fastener as claimed in Claim 2 wherein the exterior of the fastener is provided with a left hand screw thread and each of said faces is associated with a cam face extending clockwise away from said face in a peripheral direction.

5. A fastener as claimed in any preceding claim wherein the opposite end to the one provided with said one way drive slot is provided with a diametric slot.

6. A fastener substantially as described with reference to Figures 1-3 or 4 of the accompanying drawing.
